# EUROPÄISCHE PATENTSCHRIFT

(11) **EP 2 115 396 B1**
(45) Veröffentlichungstag und Bekanntmachung des Hinweises auf die Patenterteilung: **13.03.2013**
(21) Anmeldenummer: 08701147.4
(22) Anmeldetag: 18.01.2008
(51) Int. Cl.: G01D 5/252, G01D 5/14, G01D 5/249, H02K 29/08, H02P 6/04, H02P 5/52, H02K 11/00, G01D 5/244

(54) **VERFAHREN UND SYSTEM ZUM ERMITTELN DER POSITION EINES MOTORTEILS**
METHOD AND SYSTEM FOR DETERMINING THE POSITION OF A MOTOR PART
PROCÉDÉ ET SYSTÈME A DÉTERMINER LA POSITION D'UNE PIÈCE D'UN MOTEUR

(30) Priorität: 07.02.2007 DE 102007006807
(43) Veröffentlichungstag der Anmeldung: 11.11.2009
(60) Teilanmeldung: 10006476.5
(73) Patentinhaber: SEW-EURODRIVE GmbH & Co. KG, 76646 Bruchsal (DE)
(72) Erfinder: UHL, Thomas, 76646 Bruchsal (DE); HAMMEL, Wolfgang, 76646 Bruchsal (DE); SCHÄFER, Jens, 76297 Stutensee (DE)
(74) Vertreter: Tüngler, Eberhard
(86) Internationale Anmeldenummer: PCT/EP2008/000363
(87) Internationale Veröffentlichungsnummer: WO 2008/095595

(56) Entgegenhaltungen:
- EP-A- 0 336 078
- DE-A1- 4 213 380
- DE-A1- 10 135 540
- DE-A1- 10 161 227
- DE-A1- 19 534 758
- US-A- 5 434 504
- US-A1- 2005 258 786
- US-A1- 2006 049 703

## Beschreibung

Die Erfindung betrifft ein Verfahren zum Ermitteln der Position und ein System.

Aus der DE 101 35 540 A1 ist ein Verfahren zum Ermitteln einer Position eines ersten Motorteils bezüglich eines zweiten offenbart. Dabei ist das zweite und erste Motorteil nur als starrer Körper oder Aufbau realisierbar. Für ein Durchfahren von Kurven treten Probleme auf. Insbesondere bei kleinen Radien ragt das zweite Motorteil weit aus der Bahn heraus.

Aus der US 2005/0258786 A1 ist ein Verfahren zum Ermitteln einer Position bekannt, wobei Hall-Sensoren an mehreren Stellen am Umfang verwendet werden.

Aus der US 2006/0049703 A1 ist ein dreiphasig betreibbarer bürstenlose Motor bekannt

Aus der DE 4213 380 A1 ist ein kollektorioser Gleichstrommotor bekannt

Aus der EP 0 336 078 A1 ist eine Anordnung zur Drehzahl- und Rotorlageerfassung einer elektrischen Maschine bekannt.

Aus der DE 195 34 758 A1 ist ein Linearmotor mit Magnetfeldsensoren bekannt

Der Erfindung liegt daher die Aufgabe zugrunde, die Positionsermittelung bei Synchronmotoren weiterzubilden.

Erfindungsgemäß wird die Aufgabe bei dem Verfahren nach den in Anspruch 1 und bei dem System nach den in Anspruch 6 angegebenen Merkmalen gelöst.

Wichtige Merkmale der Erfindung bei dem Verfahren sind, dass zum Ermitteln der Position eines ersten Motorteils eines Elektromotors relativ zu einem zweiten Motorteil des Elektromotors vorgesehen ist,
wobei am ersten Motorteil an mehreren Stellen die von Magneten des zweiten Motorteils erzeugte oder zumindest beeinflusste Magnetfeldstärke ermittelt wird und daraus die relative Position des zweiten zum ersten Motorteil bestimmt wird,
wobei die Magnetfeldstärke an mehreren Stellen des ersten Motorteils jeweils lokal ermittelt wird, wobei die Stellen in Bewegungsrichtung voneinander beabstandet sind,
wobei jede Stelle zu einer von mindestens zwei Gruppen zugeordnet wird,
wobei durch Mehrheitsentscheidung aus den zu einer Gruppe gehörenden ermittelten Werten ein jeweiliger Signalwert bestimmt wird,
wobei aus den Signalwerten die Position bestimmt wird.

Von Vorteil ist dabei, dass das zweite Motorteil aus verschiedenen Einheiten zusammensetzbar ist, wie beispielsweise mehrere aneinander gekoppelte Wagen, Jede Einheit weist dabei beispielsweise eine regelmäßige Anordnung von Magneten auf. Jedoch sind zwischen den Wagen im Bereich der Koppelung Lücken in der Regelmäßigkeit beim Übergang zum nächsten Wagen.

Somit sind die Einheiten oder Wagen mit Rädern ausstattbar und somit auf gekrümmten Bahnen verfahrbar. Insbesondere bei kleinen Radien ragt das zweite Motorteil somit nur unwesentlich weit aus der Bahn heraus.

Das gesamte Reaktionsteil des Linearmotors, insbesondere also das zweite Motorteil, ist also nicht zwangsweise aus einem starren Körper auszuführen sondern es ist ein gekoppelter Wagenzug verwendbar als zweites Motorteil. Im Koppelbereich der Einheiten müssen keine Magnete vorgesehen werden.

Beispielsweise kann die Bahn gerade und kurvenförmige Bahnkurvenabschnitte umfassen. Der erste Motorteil ist dann vorzugsweise in geraden Bahnkurvenabschnitten angeordnet. Die Bahn ist dabei auch geschlossen ausführbar, wobei in diesem Fall der Wagenzug ebenfalls auch geschlossen ausführbar ist. Beispielsweise sind als Wagen auch Sorter einer Sorter-Anlage verwendbar.

Mittels der in Gruppen zusammenfassbaren Messstellen, aus denen dann ein jeweils der jeweiligen Gruppe zugeordnetes Signal bestimmt wird, ist es ermöglicht trotz der Lücken in der Regelmäßigkeit ein von den Lücken ungestörtes Signal zu erzeugen. Hierzu dient auch der Mehrheitsentscheid. Dabei werden vorzugsweise drei Signale derart erzeugt, dass sie um 120° räumlich phasenverschoben sind. Bei Bewegung des Zweiten Motorteils mit konstanter Geschwindigkeit ergeben sich somit drei 120° zeitlich phasenverschobene Signale. Durch Beobachtung des zeitlichen Verlaufs der Signale lässt sich sogar die Bewegungsrichtung und die Bewegungsgeschwindigkeit bestimmen. Diese drei Signale sind zur Regelung der Ströme der Wicklungen des ersten Motorteils, insbesondere Primärteils, verwendbar. Dabei sind die Wicklungen entsprechend einem Drehstrommotor, insbesondere einem als lineare Ausführung abgewickelten Drehstrommotor, betreibbar. Die Signale werden also beispielsweise einer Regelschaltung eines Umrichters zugeführt, der die Wicklungen speist. Als Stellgröße der Regelschaltung dient die an die vom Umrichter jeweils an die Wicklung angelegte Spannung. Die Regelabweichung ist durch Abweichungen des Istwertes des Stromes der Wicklung vom Sollwert hierzu vorsehbar.

Die Magnete sind vorzugsweise derart magnetisiert, dass die Magnetisierungsrichtung quer zur Bewegungsrichtung auf das erste Motorteil hin gerichtet ist. Dabei weisen nächstbenachbarte Magnete eine jeweils umgekehrte Magnetisierungsrichtung auf.

Bei einer vorteilhaften Ausgestaltung sind jeder Gruppe drei oder mehr Stellen zugeordnet: Von Vorteil ist dabei, dass zwei lückende Magnete keine Auswirkung auf die Signalverläufe haben. Somit ist eine große Lücke zwischen den regelmäßigen Anordnungen vorsehbar. Vorzugsweise ist die Länge der Lücke gleich der Periodenlänge der Anordnung der Magnete.

Bei einer vorteilhaften Ausgestaltung ist die Anzahl der Gruppen drei, insbesondere wobei drei Stellen jeder Gruppe zugeordnet sind. Von Vorteil ist dabei, dass zwei lückende Magnete überbrückbar sind mittels der Gruppenbildung und Mehrheitsentscheidung.

Bei einer vorteilhaften Ausgestaltung sind die Magnete regelmäßig angeordnet. Von Vorteil ist dabei, dass eine wenig Schwankung aufweisende Vortriebskraft erzeugbar ist.

Bei einer vorteilhaften Ausgestaltung sind die Stellen einer jeweiligen Gruppe jeweils regelmäßig voneinander beabstandet in Bewegungsrichtung angeordnet. Von Vorteil ist dabei, dass zwei oder mehr Sensoren in Sensorsysteme zusammenfassbar sind, wobei in Bewegungsrichtung zwei oder mehr Sensorsystem hintereinander anordenbar sind, insbesondere in regelmäßigen Abständen. Aus jedem Sensorsystem ist somit ein Sensor auswählbar, dessen Sensorsignale mit den Sensorsignalen eines entsprechenden Sensors aller anderen Sensorsysteme als Gruppe dem Mehrheitsentscheidungsmittel zuführbar ist.

Bei einer vorteilhaften Ausgestaltung sind alle Stellen regelmäßig voneinander beabstandet in Bewegungsrichtung angeordnet. Von Vorteil ist dabei, dass Schwankungen der Vortriebskraft reduzierbar sind.

Wichtige Merkmale bei dem System sind, dass es einen Linearmotor mit Vorrichtung zum Ermitteln der Position eines ersten Motorteils umfasst, insbesondere Primärteil, relativ zu einem zweiten Motorteil, insbesondere Sekundärteil,
wobei am ersten Motorteil an mehreren Stellen Magnetfeldsensoren angeordnet sind, die auf das zweite Motorteil gerichtet sind,
wobei das zweite Motorteil in Bewegungsrichtung einen Bereich umfasst, in welchem in Bewegungsrichtung voneinander beabstandete Magnete vorgesehen sind,
wobei ein Teilbereich des Bereichs keine Magnete aufweist,
wobei die Magnete im Bereich außerhalb des Teilbereichs voneinander regelmäßig beabstandet sind mit Abstand b, insbesondere wobei die Schwerpunkte und/oder Mittelpunkte jeweils den Abstand b zum nächstbenachbarten Magneten aufweisen,
wobei die Länge des Teilbereichs in Bewegungsrichtung größer oder zumindest gleich dem Abstand b, insbesondere dem Längenwert des Abstands b, ist,
wobei mit den Magnetfeldsensoren Mittel zur Bestimmung der relativen Position des zweiten zum ersten Motorteils verbunden sind.

Von Vorteil ist dabei, dass im Teilbereich Kopplungsvorrichtungen oder andere Vorrichtungen zwischen den das zweite Motorteil zusammensetzenden Einheiten anordenbar sind. Somit sind die Einheiten, beispielsweise Wagen, derart koppelbar, dass in Bewegungsrichtung auf die geraden linearen Bahnkurvenabschnitte folgende gekrümmte Bahnkurvenabschnitte durchfahrbar sind.

Bei einer vorteilhaften Ausgestaltung umfassen die Mittel zur Bestimmung der relativen Position Mittel zur Mehrheitsentscheidung, die jeweils mit einer Gruppe von Sensoren verbunden sind,
wobei jeder Sensor zu einer von mindestens zwei Gruppen zugeordnet ist. Von Vorteil ist dabei, dass eine durch Lücken bewirkte Störung eliminierbar ist, indem eine entsprechend große Gruppe von Sensoren zusammen vorgesehen wird zur Erzeugung eines ungestörten Spursignals.

Bei einer vorteilhaften Ausgestaltung trägt der Primärteil Wicklungen und der Sekundärteil Permanentmagnete als Magnete. Von Vorteil ist dabei, dass der Motor als Linear-Synchronmotor ausführbar ist.

Bei einer vorteilhaften Ausgestaltung ist die Länge des Teilbereichs in Bewegungsrichtung größer oder zumindest gleich dem Doppelten des Abstands b, insbesondere dem Doppelten des Längenwerts des Abstands b. Von Vorteil ist dabei, dass zwei Magnete in der regelmäßigen Anordnung von Magneten auslassbar sind und mit drei Gruppen von Messstellen mit Sensoren die bewirkten Messfehler unwirksam machbar sind.

Bei einer vorteilhaften Ausgestaltung ist wobei die Länge des Teilbereichs in Bewegungsrichtung größer oder zumindest gleich dem n-fache des Abstands b, insbesondere dem n-fachen des Längenwerts des Abstands b, wobei n eine ganze Zahl größer als 1 ist, wobei die Anzahl der Gruppen n+1 ist. Insbesondere ist die Anzahl der Magnetfeldsensoren 3 n + 3. Von Vorteil ist dabei, dass auch größere Lücken durch entsprechend größere Gruppenanzahl beherrschbar sind und ungestörte Signale zur Positionsbestimmung erzeugbar sind.

Bei einer vorteilhaften Ausgestaltung umfasst das Sekundärteil eine Magnetspur, deren bewirkte Magnetfeldanteile von den Sensoren erfasst werden. Insbesondere umfasst die Magnetspur eine Lageinformations-Codierung. Von Vorteil ist dabei, dass noch höhere Genauigkeiten, insbesondere unter zusätzlicher Anwendung des Nonius-Prinzips, ermöglicht sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- N: Nordpol
- S: Südpol
- 10: Lücke

- A: Hallsensor
- B: Hallsensor
- C: Hallsensor
- A1: Hallsensor
- B1: Hallsensor
- C1: Hallsensor
- A2: Hallsensor
- B2: Hallsensor
- C2: Hallsensor
- A3: Hallsensor
- B3: Hallsensor
- C3: Hallsensor

- xp: Periodenlänge
- x: Bewegungsrichtung

Die Erfindung wird nun anhand von Abbildungen näher erläutert:

Der Motor umfasst einen ersten Motorteil, der Wicklungen umfasst zur Erzeugung eines magnetischen Wechselfeldes.

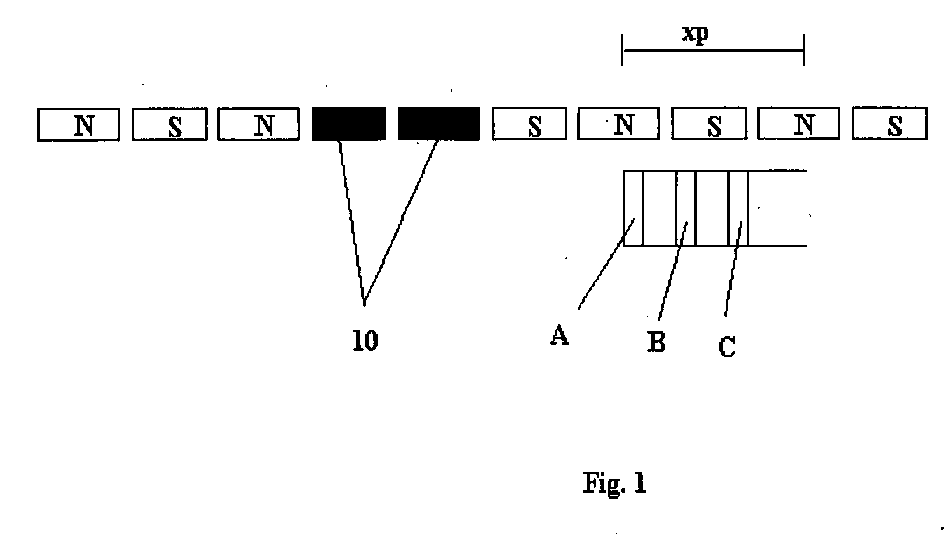

In der Figur 1 sind die Magnete des zweiten Motorteils angedeutet. Diese sind abwechselnd magnetisiert, so dass also senkrecht zur Bewegungsrichtung abwechselnd ein Nordpol beziehungsweise ein Südpol erscheint. Die Anordnung der Magnete ist mit einer Periodenlänge xp regelmäßig ausgeführt, wobei die Magnete aufeinander mit dem jeweiligen Abstand b = xp / 2 folgen. Dabei weist die Anordnung eine endliche Länge auf. Außerdem sind Lücken 10 vorgesehen.

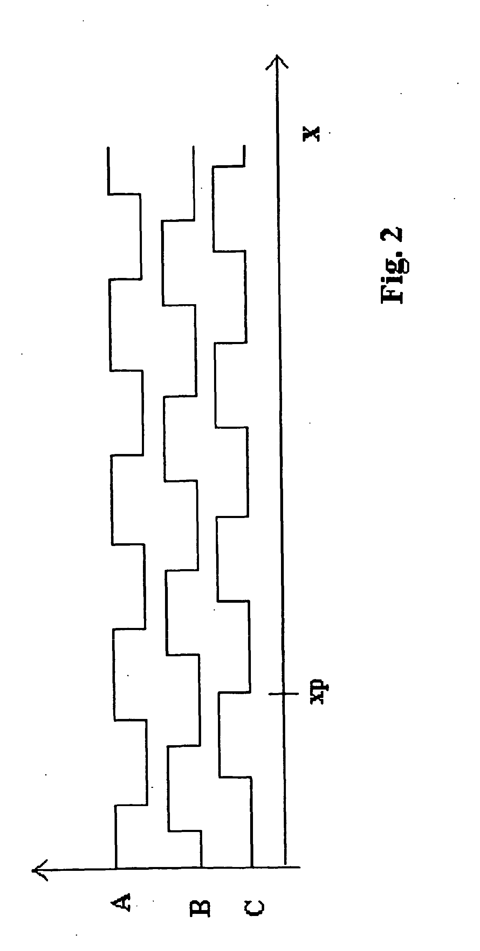

Relativ unbeweglich zum ersten Motorteil sind drei Hallsensoren (A, B, C) in Bewegungsrichtung angeordnet. Diese sind voneinander regelmäßig beabstandet mit einem jeweiligen Abstand a und erzeugen beim Bewegen des zweiten Motorteils relativ zum ersten Motorteil Signale, die schematisch in Figur 2 dargestellt sind, wobei die Lücken hierbei nicht vorhanden sind. Bei Vorhandensein der Lücken 10 sind die Signale der Spuren A, B, C entsprechend lange im LOW Zustand.

Der Abstand a beträgt vorzugsweise xp / 3 =a.

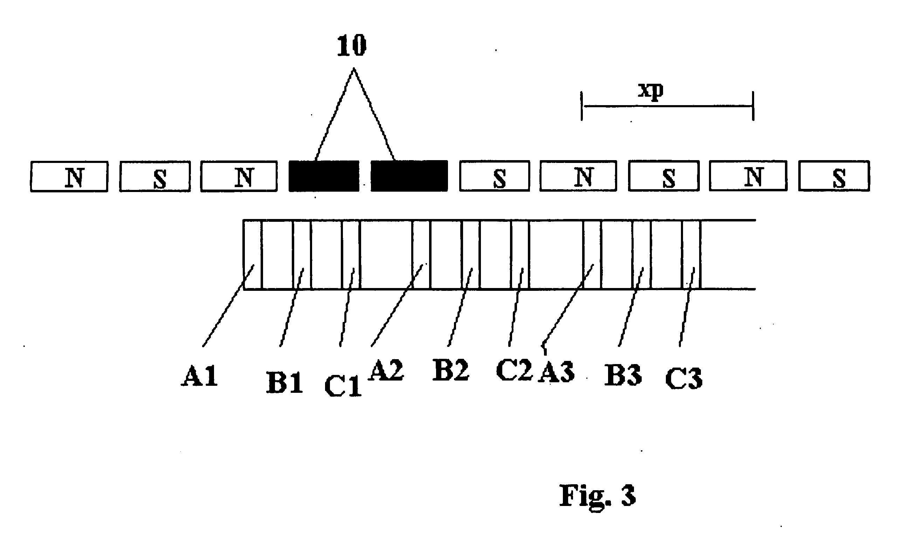

In Figur 3 ist ein bevorzugtes Ausführungsbeispiel der Erfindung beschrieben. Dabei sind drei System von Hallsensoren in regelmäßigen Abständen entlang der Bewegungsrichtung hintereinander angeordnet. Das erste System umfasst die drei Hallsensoren (A1, B1, C1), das zweite System umfasst die drei Hallsensoren (A2, B2, C2), das dritte System umfasst die drei Hallsensoren (A3, B3, C3). Die Systeme sind hintereinander mit Periodenlänge xp angeordnet. Also weist der Hallsensor A1 zum Hallsensor A2 einen Abstand xp auf.

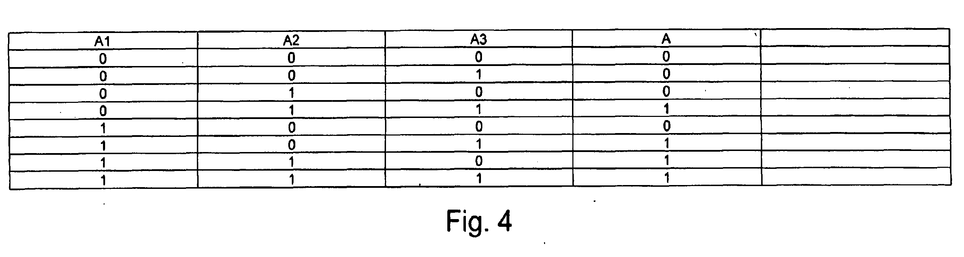

Bei der Erfindung wird nun ein stetiges Spursignal daraus erzeugt, dass die Signale der Hallsensoren A1, A2 und A3 verknüpft werden, wobei das Verknüpfungsergebnis durch Mehrheitsentscheidung bestimmt wird. Wenn also die Mehrheit auf LOW-Pegel, der in Figur 4 als 0 dargestellt ist, aufweist, wird dem Spursignal A eine 0 zugeordnet, also LOW.

Wenn die Mehrheit der Hallsensoren A1, A2 und A3 auf HIGH-Pegel, der in Figur 4 als 1 dargestellt ist, aufweist, wird dem Spursignal A eine 1 zugeordnet, also HIGH. Analog werden die Signale der Hallsensoren B1, B2 und B3 zu einem Spursignal B verknüpft und ebenso werden die Signale der Hallsensoren C1, C2 und C3 zu einem Spursignal C verknüpft. Jeweils wird die Mehrheitsentscheidung angewendet.

Auf diese Weise ist trotz der in Figur 3 gezeigten zwei Lücken 10 ein nicht lückendes Spursignal A, B, C erzeugbar. Somit ist eine Positionsbestimmung des gegen das erste Motorteil bewegbar angeordneten zweiten Motorteils vorsehbar. Dabei sind die durch die Lücken bewirkten Störungen eliminierbar.

Bei weiteren vorteilhaften Ausführungsbeispielen sind die Systeme gegeneinander mit anderen Abständen angeordnet, die jeweils ein ganzzahliges Vielfaches von xp betragen.

Bei weiteren vorteilhaften Ausführungsbeispielen sind die vom Primärteil umfassten Spulenwicklungen selbst als Magnetfeldsensoren verwendet, insbesondere unter Verwendung von Mitteln zur Bestimmung der in den Wicklungen jeweils induzierten Spannung. Vorteiligerweise werden somit Bauteile einsparbar.

## Patentansprüche

1. Verfahren zum Ermitteln der Position eines ersten Motorteils eines Elektromotors relativ zu einem zweiten Motorteil des Elektromotors,
wobei am ersten Motorteil an mehreren Stellen die von Magneten des zweiten Motorteils erzeugte oder zumindest beeinflusste Magnetfeldstärke ermittelt wird und daraus die relative Position des zweiten zum ersten Motorteil bestimmt wird,
**dadurch gekennzeichnet, dass**
die Magnetfeldstärke an mehreren Stellen des ersten Motorteils jeweils lokal ermittelt wird, wobei die Stellen in Bewegungsrichtung voneinander beabstandet sind,
wobei jeder ermittelte Wert einem von zwei Binärwerten (0, 1) zugeordnet wird,
wobei jede Stelle zu einer von mindestens zwei Gruppen zugeordnet wird,
wobei durch Mehrheitsentscheidung aus den zu einer Gruppe gehörenden ermittelten Binärwerten ein jeweiliger Signalwert bestimmt wird,
wobei aus den Signalwerten die Position bestimmt wird,
wobei jeder Gruppe drei oder mehr Stellen zugeordnet sind.

2. Verfahren nach Anspruch 1,
**dadurch gekennzeichnet, dass**
die Anzahl der Gruppen drei ist, insbesondere wobei drei Stellen jeder Gruppe zugeordnet sind.

3. Verfahren nach einem der vorangegangenen Ansprüche,
**dadurch gekennzeichnet, dass**
die Magnete regelmäßig angeordnet sind

4. Verfahren nach einem der vorangegangenen Ansprüche,
**dadurch gekennzeichnet, dass**
die Stellen einer jeweiligen Gruppe jeweils regelmäßig voneinander beabstandet in Bewegungsrichtung angeordnet sind.

5. Verfahren nach einem der vorangegangenen Ansprüche,
**dadurch gekennzeichnet, dass**
alle Stellen regelmäßig voneinander beabstandet in Bewegungsrichtung angeordnet sind.

6. System zur Durchführung eines Verfahrens nach einem der vorangegangenen Ansprüche, umfassend einen Linearmotor mit Vorrichtung zum Ermitteln der Position eines ersten Motorteils, insbesondere Primärteil, relativ zu einem zweiten Motorteil, insbesondere Sekundärteil,
wobei am ersten Motorteil an mehreren Stellen Magnetfeldsensoren angeordnet sind, die auf das zweite Motorteil gerichtet sind,
wobei das zweite Motorteil in Bewegungsrichtung einen Bereich umfasst, in weichem in Bewegungsrichtung voneinander beabstandete Magnete vorgesehen sind,
wobei ein Teilbereich des Bereichs keine Magnete aufweist,
wobei die Magnete im Bereich außerhalb des Teilbereichs voneinander regelmäßig beabstandet sind mit Abstand b, insbesondere wobei die Schwerpunkte und/oder Mittelpunkte jeweils den Abstand b zum nächstbenachbarten Magneten aufweisen,
wobei die Länge des Teilbereichs in Bewegungsrichtung größer oder zumindest gleich dem Abstand b, insbesondere dem Längenwert des Abstands b, ist,
wobei Mittel zur Bestimmung der relativen Position des zweiten zum ersten Motorteils mit den Magnetfeldsensoren verbunden sind.

7. System nach Anspruch 6,
**dadurch gekennzeichnet, dass**
die Mittel zur Bestimmung der relativen Position Mittel zur Mehrheitsentscheidung umfassen, die jeweils mit einer Gruppe von Sensoren verbunden sind,
wobei jeder Sensor zu einer von mindestens zwei Gruppen zugeordnet ist.

8. System nach einem der Ansprüche 6 bis 7,
**dadurch gekennzeichnet, dass**
der Primärteil Wicklungen trägt und der Sekundärteil Permanentmagnete als Magnete trägt.

9. System nach einem der Ansprüche 6 bis 8,
**dadurch gekennzeichnet, dass**
der Motor ein Linear-Synchronmotor ist.

10. System nach einem der Ansprüche 6 bis 9,
**dadurch gekennzeichnet, dass**
die Länge des Teilbereichs in Bewegungsrichtung größer oder zumindest gleich dem Doppelten des Abstands b, insbesondere dem Doppelten des Längenwerts des Abstands b, ist.

11. System nach einem der Ansprüche 6 bis 10,
**dadurch gekennzeichnet, dass**
die Länge des Teilbereichs in Bewegungsrichtung größer oder zumindest gleich dem n-fache des Abstands b, insbesondere dem n-fachen des Längenwerts des Abstands b, ist wobei n eine ganze Zahl größer als 1 ist,
wobei die Anzahl der Gruppen n+1 ist.

12. System nach einem der Ansprüche 6 bis 11,
**dadurch gekennzeichnet, dass**
die Anzahl der Magnetfeldsensoren 3 n + 3 ist.

13. System nach einem der Ansprüche 6 bis 12,
**dadurch gekennzeichnet, dass**
das Sekundärteil eine Magnetspur umfasst, deren bewirkte Magnetfeldanteile von den Sensoren erfasst werden.

14. System nach einem der Ansprüche 6 bis 13,
**dadurch gekennzeichnet, dass**
die Magnetspur eine Lageinformations-Codierung umfasst.

15. System nach einem der Ansprüche 6 bis 14,
**dadurch gekennzeichnet, dass**
die vom Primärteil umfassten Spulenwicklungen selbst als Magnetfeldsensoren verwendet sind, insbesondere unter Verwendung von Mitteln zur Bestimmung der in den Wicklungen jeweils induzierten Spannung.

## Claims

1. Method for determining the position of a first motor part of an electric motor relative to a second motor part of the electric motor,
wherein the magnetic field strength generated or at least influenced by magnets of the second motor part is determined at a plurality of points on the first motor part, and from this the relative position of the second motor part to the first motor part is determined,
**characterised in that**
the magnetic field strength is in each case locally determined at a plurality of points of the first motor part, the points being spaced from one another in the direction of movement,
wherein each determined value is assigned to one of two binary values (0, 1),
wherein each point is assigned to one of at least two groups,
wherein a respective signal value is determined, by majority decision, from the determined binary values belonging to one group,
wherein the position is determined from the signal values,
wherein three or more points are assigned to each group.

2. Method according to Claim 1,
**characterised in that**
the number of groups is three, in particular three points being assigned to each group.

3. Method according to one of the preceding claims,
**characterised in that**
the magnets are arranged regularly.

4. Method according to one of the preceding claims,
**characterised in that**
the points of a respective group are each arranged regularly spaced from one another in the direction of movement.

5. Method according to one of the preceding claims,
**characterised in that**
all the points are arranged regularly spaced from one another in the direction of movement.

6. System for carrying out a method according to one of the preceding claims, comprising a linear motor with device for determining the position of a first motor part, in particular primary part, relative to a second motor part, in particular secondary part,
wherein at a plurality of points on the first motor part there are arranged magnetic field sensors which are directed at the second motor part,
wherein the second motor part comprises a region, in the direction of movement, in which magnets spaced from one another in the direction of movement are provided, wherein a sub-region of the region has no magnets,
wherein the magnets in the region outside the sub-region are regularly spaced from one another at a spacing b, in particular the centres of gravity and/or centre points each having the spacing b from the nearest neighbouring magnet,
wherein the length of the sub-region in the direction of movement is greater than or at least equal to the spacing b, in particular the length value of the spacing b,
wherein means for determining the relative position of the second to the first motor part are connected to the magnetic field sensors.

7. System according to Claim 6,
**characterised in that**
the means for determining the relative position comprise means for majority decision which are each connected to a group of sensors,
wherein each sensor is assigned to one of at least two groups.

8. System according to one of Claims 6 to 7,
**characterised in that**
the primary part carries windings and the secondary part carries permanent magnets as the magnets.

9. System according to one of Claims 6 to 8,
**characterised in that**
the motor is a linear synchronous motor.

10. System according to one of Claims 6 to 9,
**characterised in that**
the length of the sub-region in the direction of movement is greater than or at least equal to twice the spacing b, in particular twice the length value of the spacing b.

11. System according to one of Claims 6 to 10,
**characterised in that**
the length of the sub-region in the direction of movement is greater than or at least equal to n-times the spacing b, in particular n-times the length value of the spacing b, n being an integer greater than 1,
wherein the number of groups is n+1.

12. System according to one of Claims 6 to 11,
**characterised in that**
the number of magnetic field sensors is 3 n + 3.

13. System according to one of Claims 6 to 12,
**characterised in that**
the secondary part comprises a magnetic track, the magnetic field portions produced by the latter being picked up by the sensors.

14. System according to one of Claims 6 to 13,
**characterised in that**
the magnetic track comprises position information coding.

15. System according to one of Claims 6 to 14,
**characterised in that**
the coil windings which the primary part comprises are used themselves as magnetic field sensors, in particular using means for determining the voltage induced in each case in the windings.

## Revendications

1. Procédé pour déterminer la position d'une première partie d'un moteur électrique par rapport à une deuxième partie du moteur électrique,
sachant qu'on détermine en plusieurs points sur la première partie du moteur l'intensité de champ magnétique produite ou au moins influencée par des aimants de la deuxième partie du moteur, et on détermine à partir de cette intensité la position relative de la deuxième partie du moteur par rapport à la première partie du moteur,
**caractérisé en ce qu'**on détermine chaque fois localement l'intensité de champ magnétique en plusieurs points de la première partie du moteur,
sachant que lesdits points sont mutuellement distants dans le sens du mouvement, sachant que chaque valeur déterminée est associée à l'une de deux valeurs binaires (0, 1),
sachant que chaque point est associé à un groupe parmi au moins deux groupes,
sachant qu'on détermine une valeur de signal respective par une décision majoritaire parmi les valeurs binaires déterminées qui appartiennent à un groupe,
sachant qu'on détermine la position à partir des valeurs de signal,
sachant que trois points ou davantage sont associés à chaque groupe.

2. Procédé selon la revendication 1, **caractérisé en ce que** le nombre de groupes est égal à trois, sachant notamment que trois points sont associés à chaque groupe.

3. Procédé selon l'une des revendications précédentes, **caractérisé en ce que** les aimants sont disposés régulièrement.

4. Procédé selon l'une des revendications précédentes, **caractérisé en ce que** les points d'un groupe respectif sont respectivement mutuellement distants de façon régulière dans le sens du mouvement.

5. Procédé selon l'une des revendications précédentes, **caractérisé en ce que** tous les points sont disposés en étant mutuellement distants de façon régulière dans le sens du mouvement.

6. Système pour la mise en oeuvre d'un procédé selon l'une des revendications précédentes, comprenant un moteur linéaire avec un dispositif pour déterminer la position d'une première partie du moteur, en particulier d'une partie primaire, par rapport à une deuxième partie du moteur, en particulier une partie secondaire,
sachant que des capteurs de champ magnétique sont disposés en plusieurs endroits sur la première partie du moteur, capteurs qui sont dirigés vers la deuxième partie du moteur, sachant que la deuxième partie du moteur comprend, dans le sens du mouvement, une région dans laquelle sont prévus des aimants mutuellement distants dans le sens du mouvement,
sachant qu'une région partielle de ladite région ne présente pas d'aimants,
sachant que les aimants sont, dans la région située en dehors de la région partielle, mutuellement distants de façon régulière avec une distance b, sachant notamment que les centres de gravité et/ou les centres géométriques présentent respectivement la distance b par rapport à l'aimant immédiatement voisin,
sachant que la longueur de la région partielle dans le sens du mouvement est supérieure ou au moins égale à la distance b, en particulier à la valeur de longueur de la distance b, sachant que des moyens pour déterminer la position relative de la deuxième partie du moteur par rapport à la première partie du moteur sont reliés aux capteurs de champ magnétique.

7. Système selon la revendication 6, **caractérisé en ce que** les moyens pour déterminer la position relative de la deuxième partie du moteur par rapport à la première partie du moteur comprennent des moyens de prise de décision majoritaire, qui sont respectivement reliés à un groupe de capteurs.
sachant que chaque capteur est associé à un groupe parmi au moins deux groupes

8. Système selon la revendication 6 ou 7, **caractérisé en ce que** la partie primaire porte des enroulements et la seconde partie porte comme aimants des aimants permanents.

9. Système selon l'une des revendications 6 à 8, **caractérisé en ce que** le moteur est un moteur synchrone linéaire.

10. Système selon l'une des revendications 6 à 9, **caractérisé en ce que** la longueur de la région partielle dans le sens du mouvement est supérieure ou au moins égale au double de la distance b, en particulier au double de la valeur de longueur de la distance b.

11. Système selon l'une des revendications 6 à 10, **caractérisé en ce que** la longueur de la région partielle dans le sens du mouvement est supérieure ou au moins égale à n fois la distance b, en particulier à n fois la valeur de longueur de la distance b, sachant que n est un nombre entier supérieur à 1,
sachant que le nombre de groupes est égal à n+1.

12. Système selon l'une des revendications 6 à 11, **caractérisé en ce que** le nombre de capteurs de champ magnétique est égal à 3 n + 3.

13. Système selon l'une des revendications 6 à 12, **caractérisé en ce que** la partie secondaire comprend une piste magnétique dont les parts de champ produites sont détectées par les capteurs.

14. Système selon l'une des revendications 6 à 13, **caractérisé en ce que** la piste magnétique comprend un codage d'information de position.

15. Système selon l'une des revendications 6 à 14, **caractérisé en ce que** les enroulements de bobine compris dans la partie primaire sont utilisés eux-mêmes comme capteurs de champ magnétique, en particulier en utilisant des moyens pour déterminer la tension respectivement induite dans les enroulements.
